# EUROPEAN PATENT SPECIFICATION

(11) **EP 3 983 662 B1**
(45) Date of publication and mention of the grant of the patent: **25.09.2024**
(21) Application number: 19734840.2
(22) Date of filing: 14.06.2019
(51) Int. Cl.: F02D 35/02, F02D 19/10, F02D 41/00, F02D 41/10, F02D 41/40

(54) **METHOD OF OPERATING PISTON ENGINE AND CONTROL SYSTEM FOR PISTON ENGINE**
VERFAHREN ZUM BETRIEB EINER KOLBENMASCHINE UND STEUERUNGSSYSTEM FÜR EINE KOLBENMASCHINE
PROCÉDÉ D'ACTIONNEMENT DE MOTEUR À PISTONS ET SYSTÈME DE COMMANDE POUR MOTEUR À PISTONS

(43) Date of publication of application: 20.04.2022
(73) Proprietor: Wärtsilä Finland Oy, 65170 Vaasa (FI)
(72) Inventor: VARJOSAARI, Mika, 65170 VAASA (FI); NORDMAN, Vesa, 65170 VAASA (FI); AXELSSON, Martin, 65170 VAASA (FI)
(74) Representative: Berggren Oy
(86) International application number: PCT/FI2019/050461
(87) International publication number: WO 2020/249845

(56) References cited:
- EP-A1- 3 140 535
- EP-A1- 3 336 339
- US-A1- 2013 325 295
- US-A1- 2014 366 839
- US-A1- 2016 146 133

## Description

### Technical field of the invention

The present invention relates to a method of operating a piston engine in a transient state using a gaseous main fuel and a liquid pilot fuel in accordance with claim 1. The invention also concerns a control system for a piston engine as defined in the other independent claim.

### Background of the invention

A possibility to operate a piston engine using a gaseous fuel, such as natural gas, provides many advantages, for instance in the form of lower emissions compared to many liquid fuels. Gaseous fuels usually need an ignition source, which is in most cases either a spark plug or pilot fuel. In dual-fuel engines, the gaseous main fuel is ignited by utilizing liquid pilot fuel, which is injected into the cylinders of the engine either directly or via a prechamber. The gaseous fuel is introduced into the intake duct and flows through the intake ports into the cylinders during the intake stroke. The liquid pilot fuel is injected by means of pilot fuel injectors at the end of the compression stroke. The pilot fuel is self-ignited, and the ignition of the pilot fuel triggers combustion of the gaseous main fuel. The air/fuel mixture is often a lean mixture comprising more air than is needed for the complete combustion of both the gaseous fuel and the liquid pilot fuel. In transient situations, where engine load is rapidly increasing, typically the fuel amount increases faster than the air amount, which leads to a rich air/fuel mixture. The rich mixture can lead to auto-ignition of the fuel or to too fast combustion speed thus causing knocking.

US 2013/325295 A1 and US 2014/366839 A1 disclose dual fuel engines operating on a gaseous fuel as main fuel being ignited by liquid pilot fuel injection. In order to reduce the risk of knocking during a transient engine operation, namely during acceleration, by unduly increasing the amount of gaseous fuel, the amount of liquid fuel is increased instead, thereby substituting for the gaseous fuel, while at the same time the required load demand is reached.

### Summary of the invention

An object of the present invention is to provide an improved method of operating a piston engine in a transient state using a gaseous main fuel that is introduced into the main combustion chamber of a cylinder of the engine during an intake stroke and a liquid pilot fuel that is introduced into the main combustion chamber or into a prechamber as one or more injection events taking place during a compression stroke for igniting the gaseous main fuel. The characterizing features of the method according to the invention are given in of claim 1. Another object of the invention is to provide an improved control system for a piston engine. The characterizing features of the control system are given in the other independent claim.

The method according to the invention comprises the steps of
- monitoring a first measurement signal indicative of the engine output power or engine speed,
- comparing the first measurement signal to a set point,
- based on the comparison between the first measurement signal and the set point, generating a first control signal for controlling the amount of the gaseous main fuel, and
- comparing the first control signal to a first limit value,
wherein
in case the first control signal is below the first limit value,
   - the amount of the gaseous main fuel introduced into the cylinders is controlled based on the first control signal, and
in case the first control signal is above the first limit value,
   - a second control signal capped to the first limit value is generated and the amount of the gaseous main fuel introduced into the cylinders is controlled based on the second control signal,
   - the difference between the first control signal and the first limit value is determined,
   - the difference between the first control signal and the first limit value is used as an input for generating a third control signal, and
   - additional liquid fuel injection into the cylinders during a combustion stroke is controlled based on the third control signal.

The control system according to the invention is configured to operate the engine in a transient state in accordance with the method defined above.

A piston engine according to the invention comprises a control system defined above.

In the method according to the invention, the output power is thus primarily controlled by adjusting the amount of the gaseous fuel introduced into combustion chambers. However, if the fuel demand of the engine is greater than an allowable amount of gaseous fuel, the amount of the gaseous fuel introduced into the cylinders is limited to a limit value. The difference between the fuel demand and the amount of gaseous fuel that can be introduced into the cylinders is determined and used as an input for controlling additional liquid fuel injection.

With the method and control system according to the invention, an engine can respond to rapidly increasing load while auto ignition or too fast combustion speed of the gaseous fuel can be avoided. By injecting the additional liquid fuel during the combustion stroke, a limitation in the gas supply can be compensated without affecting the start of combustion.

According to an embodiment of the invention, a first variable or a set of first variables indicative of the operation of the engine is measured or calculated, and the first limit value is determined based on the value of at least one first variable. The first variable used for determining the first limit value is chosen so that the first limit value reflects a limit above which knocking risk increases.

According to an embodiment of the invention, the first variables include at least one variable from the group of charge air pressure, engine load, engine speed and air/fuel ratio. Also a combination of two or more variables could be used to determine the first limit value.

According to an embodiment of the invention, a value from a look-up table is used as an additional input for generating the third control signal. The additional liquid fuel injection can thus have a basic level, which can be retrieved from a look-up table, and a variable portion, which is based on the difference between the first control signal and the first limit value.

According to an embodiment of the invention, the third control signal is capped to a second limit value, in case the duration of the additional liquid fuel injection reaches an upper limit determined for the duration of the additional liquid fuel injection. The second limit value can be used, for instance, to prevent smoke.

According to an embodiment of the invention, the upper limit for the duration of the additional liquid fuel injection is determined based on an allowable air/fuel ratio, maximum speed of the engine or maximum load of the engine.

According to an embodiment of the invention, a decrease rate of the third control signal is determined and compared to a third limit value, and in case the decrease rate exceeds the limit value, the decrease rate of the third control signal is capped to the third limit value. By preventing too rapid decrease of the additional liquid fuel injection, it is ensured that the liquid fuel injection is not terminated too early and the supply of the gaseous fuel can meet the fuel demand.

According to an embodiment of the invention, the pressure in at least one cylinder of the engine is monitored, and in case a measured peak pressure exceeds a predetermined value, the amount of the gaseous fuel introduced into the cylinders is decreased from the level determined by the first control signal or the second control signal.

According to an embodiment of the invention, one or more variables indicative of knocking is monitored, and in case knocking is detected, the amount of the gaseous fuel introduced into the cylinders is decreased from the level determined by the first control signal or the second control signal.

### Brief description of the drawings

Embodiments of the invention are described below in more detail with reference to the accompanying drawings, in which
Fig. 1 shows schematically a simplified view of the pilot fuel and main fuel injection systems of a piston engine,
Fig. 2 shows schematically one cylinder of the engine of figure 1, and
Fig. 3 shows the method according to an embodiment of the invention as a flowchart.

### Description of embodiments of the invention

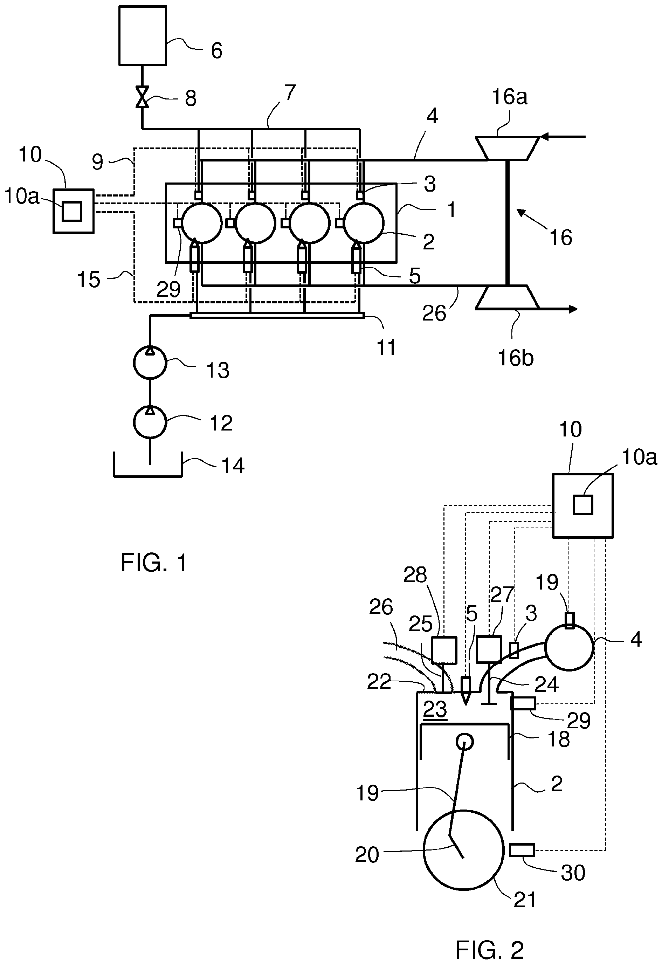

Figure 1 shows schematically pilot fuel and gaseous fuel injection systems of a piston engine 1. Figure 2 shows one of the cylinders 2 of the engine 1 of figure 1. The engine 1 is a large internal combustion engine, such as a main or an auxiliary engine of a ship or an engine that is used at a power plant for producing electricity. The rated power of the engine 1 is at least 150 kW per cylinder and the cylinder bore is at least 150 mm. In figure 1, four cylinders 2 that are arranged in line are shown, but the engine 1 can comprise any reasonable number of cylinders 2 that are arranged, for instance, in line or in a V-configuration. The engine 1 of figure 1 is a dual-fuel engine that can be operated at least in a gaseous fuel mode using a gaseous main fuel and a liquid pilot fuel. The gaseous fuel can be, for instance, natural gas, biogas, liquefied petroleum gas or ethane. The liquid pilot fuel can be, for instance, light fuel oil (LFO), marine diesel oil (MDO) or biodiesel. The engine 1 can possibly also be operated in a liquid fuel mode using only liquid fuel, such as LFO or MDO. The engine 1 could also be a multi-fuel engine, which can be operated using two or more different types of liquid fuels and/or gaseous fuels. For instance, the engine 1 could be a tri-fuel engine that can be operated in a gaseous fuel mode using gaseous main fuel and liquid pilot fuel, and in two different liquid fuel modes, for instance in a first liquid fuel mode using heavy fuel oil or other fuel containing mainly residual fuel oil and in a second liquid fuel mode using light fuel oil or other fuel containing mainly distillate fuel oil.

The engine 1 is connected to a turbocharger 16 comprising a compressor 16a and a turbine 16b for pressurizing the intake air of the engine 1. The engine 1 could also be provided with two or more turbochargers connected in series and/or in parallel.

The engine 1 is provided with separate fuel injection systems for the gaseous fuel and the pilot fuel. The gaseous fuel is stored in a gas tank 6, from which it is supplied via a gas line 7 into the cylinders 2 of the engine 1. The gas line 7 is provided with a main gas valve 8 for controlling the supply of the gaseous main fuel into the gas line 7. The main gas valve 8 can be closed for example when the engine 1 is operated in a liquid fuel mode. Each cylinder 2 of the engine 1 is provided with an own gas admission valve 3. The gas admission valves 3 are individually controllable. A first control line 9 connects the gas admission valves 3 to a control unit 10, which controls the opening and closing of the gas admission valves 3. Each gas admission valves 3 is opened and closed by means of an actuator, such as a solenoid or a step motor. The gas admission valves 3 are arranged to introduce the gaseous fuel into an intake duct 4 of the engine 1. Each gas admission valve 3 is located close to the intake valves of the respective cylinder 2. The engine 1 could also comprise additional gas admission valves for introducing part of the gaseous fuel into prechambers. The gaseous fuel is introduced into the intake duct 4 during the intake stroke. When the intake valves of a cylinder 2 are open, the gaseous fuel flows into the cylinder 2 forming an air/fuel mixture. The air/fuel mixture is preferably a lean mixture comprising more air than is needed for the complete combustion of both the gaseous fuel and the liquid pilot fuel. It should be noted that figure 1 shows only a simplified example of a fuel injection system for gaseous main fuel. The fuel injection system can comprise many additional components not shown in the figures, for instance different valves, filters etc.

The fuel injection system for the liquid pilot fuel comprises an own pilot fuel injector 5 for each cylinder 2 of the engine 1. The pilot fuel injector 5 can be arranged to inject the fuel either directly into a main combustion chamber 23, as shown in figure 2, or into a prechamber. The pilot fuel injectors 5 are individually controllable. The pilot fuel injectors 5 can be, for instance, electrically actuated. A second control line 15 connects the pilot fuel injectors 5 to the control unit 10, which controls the opening and closing of the pilot fuel injectors 5. Each pilot fuel injector 5 comprises a valve needle, which can be lifted for injecting fuel through the pilot fuel injector 5.

In the embodiment of figure 1, the pilot fuel injection system is a common rail fuel injection system comprising a fuel rail 11 for storing pressurized fuel. All the pilot fuel injectors 5 are connected to the same fuel rail 11. A low-pressure pump 12 supplies fuel from a liquid fuel tank 14 to a high-pressure pump 13, which raises the pressure of the pilot fuel to a level that is suitable for direct fuel injection and supplies it into the fuel rail 11, from which the fuel is supplied to the pilot fuel injectors 5. The fuel injection pressure can be in the range of 800 to 3000 bar. Instead of a single fuel rail 11, each pilot fuel injector 5 could be provided with an own fuel accumulator, or the pilot fuel injection system could comprise two or more fuel rails 11, each serving two or more pilot fuel injectors 5. In addition to the use as a pilot fuel injection system, the fuel injection system of figure 1 can also be used for injecting liquid fuel into the cylinders 2 of the engine 1 in other situations.

The pilot fuel injection system could also be used when the engine 1 is operated in a liquid fuel mode using only liquid fuel. In that case, the pilot fuel injectors 5 would function also as main fuel injectors. It is also possible that only parts of the fuel injection system of figure 1 are used as part of a fuel injection system for liquid main fuel. For instance, additional fuel injectors could be connected to the fuel rail 11 of figure 1 for injecting liquid main fuel. In the gaseous fuel mode, the liquid pilot fuel would be injected by the pilot fuel injectors 5, and in a liquid fuel mode the liquid fuel would be injected by main fuel injectors. In both operating modes, the same low-pressure pump 12 and high-pressure pump 13 would be used. The pilot fuel injectors 5 and the main fuel injectors could be integrated in fuel injector units. The pilot fuel is injected into the cylinders 2 of the engine 1 via the pilot fuel injectors 5 during the compression stroke when the piston is close to top dead center.

In addition to the fuel injection systems shown in figure 1, the engine 1 can be provided with at least one additional fuel injection system, for instance for injecting liquid main fuel into the cylinders 2 of the engine 1. The additional fuel injection system could be a common rail system or a fuel injection system having an own fuel injection pump for each cylinder 2 of the engine 1.

Figure 2 shows schematically one cylinder 2 of the engine 1 of figure 1. Each cylinder 2 of the engine 1 is provided with a piston 18, which is configured to move in a reciprocating manner within the cylinder 2. The piston 18 is connected via a connecting rod 19 to a crankshaft 20. A flywheel 21 is attached to one end of the crankshaft 20. Together with the walls of the cylinder 2 and a cylinder head 22, the piston 18 delimits a main combustion chamber 23. Each cylinder 2 of the engine 1 is provided with at least one intake valve 24. Each cylinder 2 can be provided for example with two intake valves 24. The intake valves 24 are used for opening and closing fluid communication between the intake duct (intake receiver) 4 and the main combustion chamber 23. Each cylinder 2 of the engine 1 is provided with at least one exhaust valve 25. Each cylinder 2 of the engine can be provided for example with two exhaust valves 25. The exhaust valves 25 are used for opening and closing fluid communication between the combustion chamber 23 and an exhaust duct 26.

The intake valves 24 are connected to intake valve actuating means 27. The intake valve actuating means 27 are used for opening and closing the intake valves 24. The intake valve actuating means 27 can be configured to allow variable intake valve timing. The crank angle at which the intake valves 24 are opened and/or closed can thus be varied. The intake valve actuating means 27 can be implemented in many alternative ways. The intake valve actuating means 27 can comprise an electrical, hydraulic or mechanical actuator. The intake valve actuating means 27 could also be any combination of electrical, hydraulic and/or mechanical means. For instance, the intake valves 24 can be opened by means of a camshaft. The closing force for closing the intake valves 24 can be created by means of one or more springs, such as helical springs and/or air springs. The closing of the intake valves 24 can be delayed by means of a hydraulic system. Alternatively, both the opening and closing timing could be determined by means of an electrical actuator, such as a solenoid. Alternatively, the intake valves 24 could be both opened and closed hydraulically. The intake valve actuating means 27 are connected to the control unit 10, which is configured to transmit a control signal to the intake valve actuating means 27 for determining the opening and/or closing timing of the intake valves 24.

In the embodiment of figure 2, the exhaust valves 25 are connected to similar actuating means 28 as the intake valves 24. However, the exhaust valves 25 could also be provided with different actuating means. For instance, it is not necessary that the actuating means 28 of the exhaust valves 25 allow variable valve timing. In the embodiment of figure 2, also the exhaust valve actuating means 28 are connected to the control 10 unit which is configured to transmit a control signal to the exhaust valve actuating means 28 for determining the opening and/or closing timing of the exhaust valves 25. Instead of the arrangements described above, both the intake valves 24 and the exhaust valves 25 could be cam-controlled. The valve timings could be either variable or fixed.

The gas admission valves 3 and the pilot fuel injectors 5 are connected to the control unit 10. The injection timings and durations of both the pilot fuel injection and the main fuel injection can thus be individually controlled in each cylinder 2 of the engine 1.

Each cylinder 2 of the engine 1 is provided with a cylinder pressure sensor 29. The cylinder pressure sensor 29 is arranged to measure pressure in the cylinder 2. The engine 1 is provided with data processing means, such as the control unit 10, which receives measurement data from the cylinder pressure sensors 29. The engine 1 further comprises a crank angle sensor 30 or other means for determining the angular position of the crankshaft 20. In the embodiment of figure 2, the crank angle sensor 30 monitors the angular position of the flywheel 21. On the basis of the angular position of the flywheel 21, the position of the piston 18 in each cylinder 2 can be determined. In addition to the pressure measurement data, the control unit 10 also receives measurement data from the crank angle sensor 30. The cylinder pressure can thus be determined in respect of crank angle.

During normal steady-state operation of the engine 1 in the gaseous fuel mode, intake valves 24 of each cylinder 2 of the engine 1 open at the end of the exhaust stroke. At the beginning of the intake stroke, the control unit 10 transmits a control signal via the first control line 9 to the gas admission valve 3 for opening the gas admission valve 3. The gas admission valve 3 opens and the valve 3 is kept open for a certain period of time for allowing the gaseous fuel to flow into the intake duct 4 and further into the cylinder 3. Before the end of the intake stroke, the gas admission valve 3 is closed. Also the intake valves 24 are closed, and during the compression stroke following the intake stroke, the air/fuel mixture in the cylinder 2 is compressed. As the piston 18 in the cylinder 2 approaches top dead center, the control unit 10 transmits a control signal via the second control line 15 to the pilot fuel injector 5 for opening the pilot fuel injector 5 and for injecting liquid pilot fuel into the cylinder 2. The valve needle of the pilot fuel injector 5 is lifted for a short period of time and pilot fuel is injected into the cylinder 2. After a certain ignition lag, the pilot fuel is self-ignited. The amount of the pilot fuel is relatively small. The combustion of the pilot fuel can release, for instance, less than five percent of the heat released by the combustion in the cylinder 2. The combustion of the pilot fuel ignites also the mixture of air and the gaseous main fuel. When the piston 18 is close to bottom dead center, the exhaust valves 25 open. During the exhaust stroke, the exhaust gases flow out of the cylinder 2, and a new engine cycle begins.

In steady-state operation the engine 1 is operated using a lean air/fuel mixture. In transient situations, where the engine load rapidly increases, the supply of fuel into the cylinders needs to be increased. The turbocharger 16 cannot immediately respond to the increased load, and therefore the air/fuel mixture becomes richer. This can lead to auto ignition or too fast combustion of the gaseous fuel thus causing knocking. The present invention addresses this problem.

In the method according to the invention, the engine is operated in a transient state using a gaseous main fuel that is introduced into the main combustion chamber 23 of a cylinder 2 of the engine 1 during an intake stroke and a liquid pilot fuel that is introduced into the main combustion chamber 23 or into a prechamber as one or more injection events taking place during a compression stroke for igniting the gaseous main fuel.

One example of a gas supply system suitable for use in the method according to the invention has been described above. However, the system does not need to be identical to the system of figures 1 and 2. In addition to the gas supply into the main combustion chambers 23, part of the gaseous fuel can be introduced into prechambers, in case the engine 1 is provided with prechambers.

For igniting the gaseous main fuel, liquid pilot fuel is introduced into the main combustion chambers 23 and/or into prechambers. A liquid fuel injection system described above can be used for injecting the liquid fuel. The liquid pilot fuel is injected during the compression stroke. The pilot fuel injection can be divided into one or more injection events. The pilot fuel injection can take place for example in the range 50-20 degrees before top dead center.

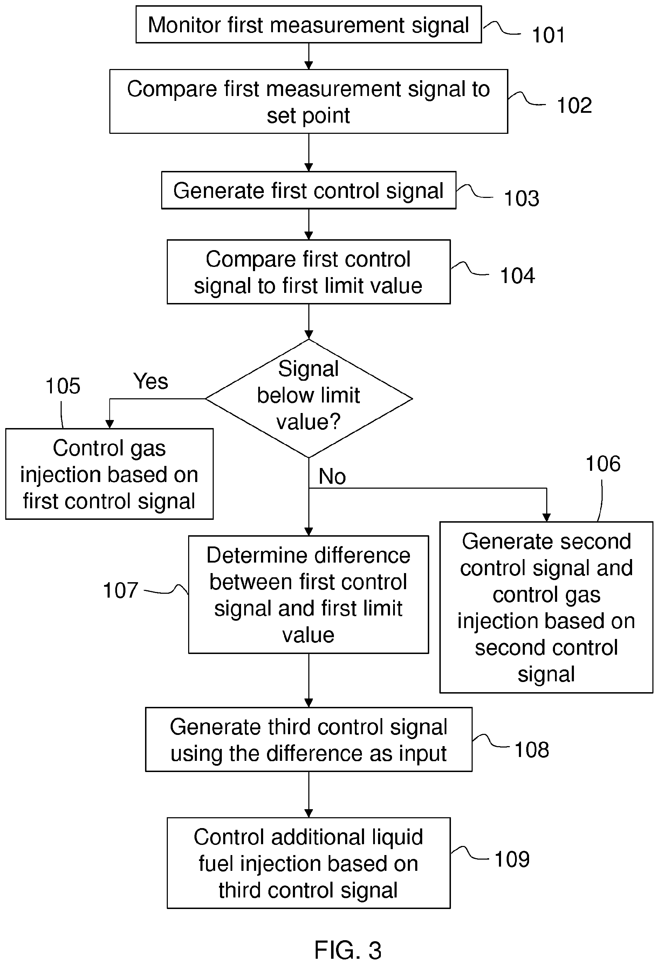

The steps of the method according to the present invention are shown in figure 3. In a first step of the method, a first measurement signal indicative of the engine output power or engine speed is monitored 101. The first measurement signal is compared to a set point 102. For instance, if the first measurement signal is a speed signal, it is compared to the desired engine speed. The use of a speed signal as the first measurement signal is suitable for many different applications, for instance for engine generator sets where the aim is to keep the rotation speed of the engine and the generator constant. Instead of a speed signal, for example a signal indicative of the electrical power produced by a generator that is driven by the engine could be monitored and compared to a set point.

Based on the comparison between the first measurement signal and the set point, a first control signal for controlling the amount of the gaseous main fuel is generated 103. The engine 1 can comprise a PID controller 10a, which can be part of the control unit 10. The PID controller 10a can receive the first measurement signal and the set point. The first control signal can be generated by the PID controller 10a based on the difference between the first measurement signal and the set point.

The first control signal is compared to a first limit value 104. The first limit value is indicative of the maximum amount of gaseous fuel that can be introduced into the cylinders of the engine without a significant knocking risk. If the first control signal is below the first limit value, the knocking risk is low. The first limit value does not have to be constant, but it can be a changing limit value. The first limit value can be determined based on the value of one or more first variables, which are measured or calculated. The first variables can include charge air pressure, engine load, engine speed and air/fuel ratio. For instance, the charge air pressure of the engine can be monitored, and based on the charge air pressure, the first limit value can be determined. A higher charge air pressure allows more gaseous main fuel to be introduced into the cylinders of the engine without a knocking risk, and the first limit value could thus increase as the charge air pressure increases. If the first limit value is determined based on the air/fuel ratio, the mass of the injected fuel and the mass of the air introduced into the cylinders are calculated, and the first limit value is determined so that a minimum allowed air/fuel ratio is achieved. The first limit value could also be determined based on a combination of two or more first variables. For instance, both the charge air pressure and the engine load or engine speed could be monitored, and the first limit value could be determined based on the charge air pressure and the engine load or engine speed.

If the first control signal is below the first limit value, the amount of the gaseous main fuel is controlled based on the first control signal 105. When the first control signal is below the first limit value, the knocking risk is low. The output power of the engine can thus be controlled based on the first control signal, such as the output signal of the PID controller 10a.

If the first control signal is above the first limit value, a second control signal capped to the first limit value is generated and the amount of the gaseous main fuel is controlled based on the second control signal 106. When the first control signal is above the first limit value, it is an indication that the knocking risk increases if the amount of the gaseous fuel introduced into the cylinders is increased on the basis of the first control signal. The first control signal, such as the output signal of the PID controller 10a, is therefore not used to directly control the amount of the gaseous main fuel. The amount of the gaseous main fuel is thus not increased as much as the output signal of the PID controller 10a indicates.

If the amount of the gaseous main fuel introduced into the cylinders does not equal the fuel demand, the speed of the engine drops if the effect of the limited supply of the gaseous main fuel is not compensated. Therefore, the difference between the first control signal and the first limit value is determined 107, the difference between the first control signal and the first limit value is used as an input for generating a third control signal 108, and additional liquid fuel injection into the cylinders 2 during a combustion stroke is controlled based on the third control signal 109. Because the second control signal has been capped to the first limit value, the amount of the gaseous main fuel introduced into the cylinders of the engine is not sufficient for meeting the power demand. The effect of inadequate supply of the gaseous main fuel is compensated by injecting liquid fuel into the cylinders. Because the additional liquid fuel injection is carried out during the combustion stroke, the pilot fuel injection does not have to be changed, and the start of the combustion is thus not affected. The additional liquid fuel injection can take place, for example, in the range of 0-25 degrees after top dead center.

The third control signal could be based on the difference between the first control signal and the first limit value. However, this is not necessary, but a value from a look-up table can be used as an additional input for generating the third control signal. The additional liquid fuel injection can thus have a basic level that is determined using a look-up table, and the difference between the first limit value and the first measurement signal can determine a variable portion of the additional liquid fuel injection. The look-up table can comprise different basic levels of additional liquid fuel injection for different speed/load combinations.

An upper limit can be determined for the duration of the additional liquid fuel injection. The upper limit can be used for example to prevent smoke. In case the duration of the additional liquid fuel injection reaches the upper limit, the third control signal can be capped to a second limit value. The upper limit for the duration of the additional liquid fuel injection can be determined, for example, based on an allowable air/fuel ratio, maximum speed of the engine or maximum load of the engine.

Also the decrease rate of the third control signal can have a limit value. The decrease rate of the third control signal can be determined and compared to a third limit value, and in case the decrease rate exceeds the limit value, the decrease rate of the third value can be capped to the third limit value. By preventing too rapid decreasing of the additional liquid fuel injection, it is ensured that the additional liquid fuel injection is not terminated too early and the supply of the gaseous main fuel can meet the fuel demand.

The amount of the gaseous fuel can be further controlled based on the cylinder pressures. The cylinder pressures can be monitored and in case a measured peak pressure in one or more cylinders exceeds a predetermined value, the amount of the gaseous fuel introduced into the cylinders can be decreased from the level determined by the first control signal or the second control signal.

The amount of the gaseous fuel can be further controlled based on detected knocking. One or more variables indicative of knocking can be monitored, and in case knocking is detected, the amount of the gaseous fuel introduced into the cylinders can be decreased from the level determined by the first control signal or the second control signal. Knocking can be detected for example by monitoring cylinder pressures.

It will be appreciated by a person skilled in the art that the invention is not limited to the embodiments described above, but may vary within the scope of the appended claims.

## Claims

1. A method of operating a piston engine (1) in a transient state using a gaseous main fuel that is introduced into the main combustion chamber (23) of a cylinder (2) of the engine (1) during an intake stroke and a liquid pilot fuel that is introduced into the main combustion chamber (23) or into a prechamber as one or more injection events taking place during a compression stroke for igniting the gaseous main fuel, the method comprising the steps of
- monitoring a first measurement signal indicative of the engine output power or engine speed (101),
- comparing the first measurement signal to a set point (102),
- based on the comparison between the first measurement signal and the set point, generating a first control signal for controlling the amount of the gaseous main fuel (103), and
- comparing the first control signal to a first limit value (104),
wherein
in case the first control signal is below the first limit value,
- the amount of the gaseous main fuel introduced into the cylinders (2) is controlled based on the first control signal (105), and
in case the first control signal is above the first limit value,
- a second control signal capped to the first limit value is generated and the amount of the gaseous main fuel introduced into the cylinders (2) is controlled based on the second control signal (106),
- the difference between the first control signal and the first limit value is determined (107),
- the difference between the first control signal and the first limit value is used as an input for generating a third control signal (108), and
- additional liquid fuel injection into the cylinders (2) during a combustion stroke is controlled based on the third control signal (109).

2. A method according to claim 1, wherein a first variable or a set of first variables indicative of the operation of the engine (1) is measured or calculated, and the first limit value is determined based on the value of at least one first variable.

3. A method according to claim 2, wherein the first variables include at least one variable from the group of charge air pressure, engine load, engine speed and air/fuel ratio.

4. A method according to any of the preceding claims, wherein a value from a look-up table is used as an additional input for generating the third control signal.

5. A method according to any of the preceding claims, wherein the third control signal is capped to a second limit value, in case the duration of the additional liquid fuel injection reaches an upper limit determined for the duration of the additional liquid fuel injection.

6. A method according to claim 5, wherein the upper limit for the duration of the additional liquid fuel injection is determined based on an allowable air/fuel ratio, maximum speed of the engine or maximum load of the engine.

7. A method according to any of the preceding claims, wherein a decrease rate of the third control signal is determined and compared to a third limit value, and in case the decrease rate exceeds the limit value, the decrease rate of the third control signal is capped to the third limit value.

8. A method according to any of the preceding claims, wherein the pressure in at least one cylinder (2) of the engine is monitored, and in case a measured peak pressure exceeds a predetermined value, the amount of the gaseous fuel introduced into the cylinders (2) is decreased from the level determined by the first control signal or the second control signal.

9. A method according to any of the preceding claims, wherein one or more variables indicative of knocking is monitored, and in case knocking is detected, the amount of the gaseous fuel introduced into the cylinders (2) is decreased from the level determined by the first control signal or the second control signal.

10. A control system for a piston engine (1), wherein the control system is configured to operate the engine (1) in a transient state in accordance with any of the preceding claims.

11. A piston engine (1) comprising a control system according to claim 10.

## Patentansprüche

1. Verfahren zum Betreiben eines Kolbenmotors (1) in einem Übergangszustand unter Verwendung eines gasförmigen Hauptbrennstoffs, der während eines Ansaughubs in die Hauptbrennkammer (23) eines Zylinders (2) des Motors (1) eingeführt wird, und eines flüssigen Pilotbrennstoffs, der in die Hauptbrennkammer (23) oder in eine Vorkammer als ein oder mehrere Einspritzvorgänge eingeführt wird, die während eines Kompressionshubs zum Zünden des gasförmigen Hauptbrennstoffs stattfinden, wobei das Verfahren die folgenden Schritte umfasst
- Überwachen eines ersten Messsignals, das die Motorausgangsleistung oder die Motordrehzahl (101) angibt,
- Vergleichen des ersten Messsignals mit einem Sollwert (102),
- basierend auf dem Vergleich zwischen dem ersten Messsignal und dem Sollwert Erzeugen eines ersten Steuersignals zum Steuern der Menge des gasförmigen Hauptbrennstoffs (103), und
- Vergleichen des ersten Steuersignals mit einem ersten Grenzwert (104),
wobei
falls das erste Steuersignal unter dem ersten Grenzwert liegt,
- die Menge des in die Zylinder (2) eingeleiteten gasförmigen Hauptkraftstoffs auf Grundlage des ersten Steuersignals gesteuert wird (105), und
falls das erste Steuersignal über dem ersten Grenzwert liegt,
- ein auf den ersten Grenzwert begrenztes zweites Steuersignal erzeugt wird und die Menge des in die Zylinder (2) eingeleiteten gasförmigen Hauptkraftstoffs auf der Grundlage des zweiten Steuersignals gesteuert wird (106),
- die Differenz zwischen dem ersten Steuersignal und dem ersten Grenzwert ermittelt wird (107),
- die Differenz zwischen dem ersten Steuersignal und dem ersten Grenzwert als Eingangsgröße zur Erzeugung eines dritten Steuersignals verwendet wird (108), und
- die zusätzliche Einspritzung von flüssigem Kraftstoff in die Zylinder (2) während eines Verbrennungstakts auf der Grundlage des dritten Steuersignals gesteuert wird (109) .

2. Verfahren nach Anspruch 1, wobei eine erste Variable oder ein Satz erster Variablen, die den Betrieb des Motors (1) anzeigen, gemessen oder berechnet wird, und der erste Grenzwert basierend auf dem Wert von mindestens einer ersten Variablen bestimmt wird.

3. Verfahren nach Anspruch 2, wobei die ersten Variablen mindestens eine Variable aus der Gruppe Ladeluftdruck, Motorlast, Motordrehzahl und Luft- /Kraftstoffverhältnis umfassen.

4. Verfahren nach einem der vorhergehenden Ansprüche, wobei ein Wert aus einer Nachschlagetabelle als zusätzlicher Eingang zum Erzeugen des dritten Steuersignals verwendet wird.

5. Verfahren nach einem der vorhergehenden Ansprüche, wobei das dritte Steuersignal auf einen zweiten Grenzwert begrenzt wird, falls die Dauer der zusätzlichen Flüssigkraftstoffeinspritzung eine für die Dauer der zusätzlichen Flüssigkraftstoffeinspritzung bestimmte Obergrenze erreicht.

6. Verfahren nach Anspruch 5, wobei die Obergrenze für die Dauer der zusätzlichen Flüssigkraftstoffeinspritzung basierend auf einem zulässigen Luft-Kraftstoff-Verhältnis, der Höchstdrehzahl des Motors oder der Höchstlast des Motors bestimmt wird.

7. Verfahren nach einem der vorhergehenden Ansprüche, wobei eine Abnahmerate des dritten Steuersignals bestimmt und mit einem dritten Grenzwert verglichen wird, und falls die Abnahmerate den Grenzwert überschreitet, die Abnahmerate des dritten Steuersignals auf den dritten Grenzwert begrenzt wird.

8. Verfahren nach einem der vorhergehenden Ansprüche, wobei der Druck in mindestens einem Zylinder (2) des Motors überwacht wird, und falls ein gemessener Spitzendruck einen vorgegebenen Wert überschreitet, die Menge des in die Zylinder (2) eingeleiteten gasförmigen Kraftstoffs von dem durch das erste Steuersignal oder das zweite Steuersignal bestimmten Niveau verringert wird.

9. Verfahren nach einem der vorhergehenden Ansprüche, wobei eine oder mehrere Variablen, die auf Klopfen hinweisen, überwacht werden, und wobei Klopfen festgestellt wird, die Menge des in die Zylinder (2) eingeleiteten gasförmigen Kraftstoffs von dem durch das erste Steuersignal oder das zweite Steuersignal bestimmten Niveau verringert wird.

10. Steuersystem für einen Kolbenmotor (1), wobei das Steuersystem so konfiguriert ist, dass es den Motor (1) in einem Übergangszustand gemäß einem der vorhergehenden Ansprüche betreibt.

11. Kolbenmotor (1) mit einem Steuersystem gemäß Anspruch 10.

## Revendications

1. Un procédé pour faire fonctionner un moteur à piston (1) dans un état transitoire en utilisant un carburant principal gazeux qui est introduit dans la chambre de combustion principale (23) d'un cylindre (2) du moteur (1) pendant une course d'admission et un carburant pilote liquide qui est introduit dans la chambre de combustion principale (23) ou dans une préchambre comme un ou plusieurs événements d'injection ayant lieu pendant une course de compression pour enflammer le carburant principal gazeux, le procédé comprenant les étapes suivantes
- surveillance d'un premier signal de mesure indicatif de la puissance de sortie de moteur ou du régime de moteur (101),
- comparaison du premier signal de mesure à un point de consigne (102),
- sur la base de la comparaison entre le premier signal de mesure et le point de consigne, génération d'un premier signal de commande pour commander la quantité de carburant principal gazeux (103), et
- comparaison du premier signal de commande à une première valeur limite (104),
dans laquelle
si le premier signal de commande est inférieur à la première valeur limite,
- la quantité de carburant principal gazeux introduite dans les cylindres (2) est commandée sur la base du premier signal de commande (105), et
si le premier signal de commande est supérieur à la première valeur limite,
- un deuxième signal de commande plafonné à la première valeur limite est généré et la quantité de carburant principal gazeux introduite dans les cylindres (2) est commandée sur la base du deuxième signal de commande (106),
- la différence entre le premier signal de commande et la première valeur limite est déterminée (107),
- la différence entre le premier signal de commande et la première valeur limite est utilisée comme entrée pour générer un troisième signal de commande (108), et
- une injection supplémentaire de carburant liquide dans les cylindres (2) pendant une course de combustion est commandée sur la base du troisième signal de commande (109) .

2. Un procédé selon la revendication 1, dans lequel une première variable ou un ensemble de premières variables indiquant le fonctionnement du moteur (1) est mesuré ou calculé, et la première valeur limite est déterminée sur la base de la valeur d'au moins une première variable.

3. Un procédé selon la revendication 2, dans lequel les premières variables comprennent au moins une variable du groupe de la pression d'air de suralimentation, de la charge du moteur, du régime du moteur et du rapport air/carburant.

4. Un procédé selon l'une des revendications précédentes, dans lequel une valeur provenant d'une table de recherche est utilisée comme entrée supplémentaire pour générer le troisième signal de commande.

5. Un procédé selon l'une des revendications précédentes, dans lequel le troisième signal de commande est plafonné à une deuxième valeur limite, au cas où la durée de l'injection supplémentaire de carburant liquide atteindrait une limite supérieure déterminée pour la durée de l'injection supplémentaire de carburant liquide.

6. Un procédé selon la revendication 5, dans lequel la limite supérieure de la durée de l'injection supplémentaire de carburant liquide est déterminée sur la base d'un rapport air/carburant admissible, du régime maximal du moteur ou de la charge maximale du moteur.

7. Un procédé selon l'une des revendications précédentes, dans lequel une vitesse de décroissance du troisième signal de commande est déterminée et comparée à une troisième valeur limite, et au cas où la vitesse de décroissance dépasse la valeur limite, la vitesse de décroissance du troisième signal de commande est plafonnée à la troisième valeur limite.

8. Un procédé selon l'une des revendications précédentes, dans lequel la pression dans au moins un cylindre (2) du moteur est surveillée, et au cas où une pression de pointe mesurée dépasse une valeur prédéterminée, la quantité de carburant gazeux introduite dans les cylindres (2) est réduite par rapport au niveau déterminé par le premier signal de commande ou le second signal de commande.

9. Un procédé selon l'une des revendications précédentes, dans lequel une ou plusieurs variables indicatives du cognement sont surveillées, et au cas où le cognement est détecté, la quantité de carburant gazeux introduite dans les cylindres (2) est réduite par rapport au niveau déterminé par le premier signal de commande ou le second signal de commande.

10. Un système de commande pour un moteur à piston (1), dans lequel le système de commande est configuré pour faire fonctionner le moteur (1) dans un état transitoire selon l'une des revendications précédentes.

11. Un moteur à piston (1) comprenant un système de commande selon la revendication 10.
